# EUROPEAN PATENT SPECIFICATION

(11) **EP 1 700 761 B1**
(45) Date of publication and mention of the grant of the patent: **22.08.2007**
(21) Application number: 06110869.2
(22) Date of filing: 08.03.2006
(51) Int. Cl.: B60R 25/04

(54) **Apparatus for authenticating vehicle driver**
Vorrichtung zur Authentifizierung eines Fahrzeugfahrers
Dispositif d'authentification d'un conducteur de véhicule

(30) Priority: 10.03.2005 JP 2005067256
(43) Date of publication of application: 13.09.2006
(73) Proprietor: OMRON CORPORATION, Kyoto-shi, Kyoto 600-8530 (JP)
(72) Inventor: Ido, Yusaku OMRON Corp. 801, Minamifudodo-cho, Kyoto-Shi Kyoto 600-8530 (JP); Ota, Shunji OMRON Corp. 801, Minamifudodo-cho,, Kyoto-Shi Kyoto 600-8530 (JP)
(74) Representative: Weihs, Bruno Konrad

(56) References cited:
- WO-A-02/08022
- DE-A1- 10 156 737
- US-B1- 6 282 475

## Description

### BACKGROUND OF THE INVENTION

The present invention relates to an apparatus for authenticating a driver of a vehicle such as a car.

Many types of anti-theft apparatuses have been proposed to improve security against car theft. Examples of the apparatuses include an anti-theft apparatus adapted to capture a potential driver's facial image and to compare the captured facial image with a pre-registered facial image of an authorized driver. Such apparatus is proposed in Japanese Patent Applications Laid-Open No. H11-43016A and No. 2004-330979A.

Japanese Patent Application Laid-Open No. H11-43016A discloses an anti-theft apparatus for vehicles configured to capture a facial image of a potential driver in a driver's seat ,and to compare the captured facial image with a pre-registered facial image of an authorized driver. The apparatus allows the driver to start an engine if a match of facial images between the authorized driver and the potential driver is made.

Japanese Patent Application Laid-Open No. 2004-330979A discloses an apparatus for vehicles configured to capture a facial image of a driver in a driver seat ,and to compare the captured facial image with a pre-stored facial image of an authorized driver. If a match of facial images between the authorized driver and the potential driver is made, the apparatus allows the driver to start an engine under the condition that the driver's face is oriented in a proper direction. A similar system is described in WO-A-02/08022.

However, all proposed apparatuses suffer from the inherent disadvantage that the apparatuses prevent an authorized driver from leaving the driving to an accompanying passenger. Since the apparatuses capture and analyze only a facial image of person in the driver seat, the apparatuses do not allow an unauthorized person, i.e. those who are not registered as an authorized driver, to start an engine even if the authorized driver is in a passenger seat.

If the authorized driver is to leave the driving to an accompanying passenger, the apparatuses require a separate procedure such as registration of the passenger's facial image, thereby causing inconveniences.

A feature of the invention is to provide an authenticating apparatus adapted to allow an unauthorized person to start an engine under the condition that match of facial images between an authorized driver and an accompanying passenger is made.

### SUMMARY OF THE INVENTION

An apparatus for authenticating a driver of a vehicle according to the present invention is provided with an image capturing section adapted to capture a facial image of a second person such as a passenger in a passenger seat as well as that of a first person such as a potential driver in a driver seat.

The apparatus is also provided with a controller adapted to compare the captured facial images with a pre-registered facial image of an authorized driver, and to allow the first person to start an engine if either one of the captured facial images matches the facial image of the authorized driver. Capturing facial images of the first and second persons can be done by the image capturing section, simultaneously or separately.

When capturing the facial images simultaneously, the image capturing section is adapted to have a lens having such an angle of view that facial images of the first and second persons are captured at one time. Generally, the image capturing section is adapted to have a wide-angle lens. If a vehicle is a car, it's preferable that the image capturing section is disposed adjacent to an interior rear view mirror.

According to another aspect of the invention, the controller first compares the facial image of the first person with the facial image of the authorized driver. Then, in the event that the image of the first person does not match the facial image of the authorized driver, the controller compares the facial image of the second person with the facial image of the authorized driver.

This configuration allows a shortened processing time, since in many cases the facial image of the first person is expected to match a facial image of the authorized driver.

According to another aspect of the invention, the image capturing section and the controller are activated by predetermined triggers.

Examples of the predetermined triggers include, but are not limited to, a signal fed from a door sensor disposed adjacent to a vehicle seat and a signal fed from a seat sensor for detecting a presence of a person in a vehicle seat.

The door sensor generates a trigger signal when detecting that a vehicle door is closed. The seat sensor generates a trigger signal when detecting the presence of a person in a vehicle seat.

Adjusting an angle of view enables the image capturing section to capture facial images of the first and second persons in the respective driver and front passenger seats, or to capture a facial image of a person in the back passenger seat as well as the facial images of the first and second persons.

In the present invention, the term "authenticating a driver" refers to verifying whether a person in a driver seat is authorized to start an engine.

The foregoing and other features and attendant advantages of the present invention will become more apparent from the reading of the following detailed description of the invention in conjunction with the accompanying drawings.

### BRIEF DESCRIPTION OF THE DRAWINGS

FIG.1 is a schematic diagram of a car employing an authenticating apparatus according to an embodiment of the invention;
FIG.2 is a schematic diagram of an arrangement of a camera;
FIG.3 is a block diagram of the authenticating apparatus; and
FIG.4 is a flow chart of a process performed by the authenticating apparatus.

### DETAILED DESCRIPTION OF THE PREFERRED EMBODIMENTS

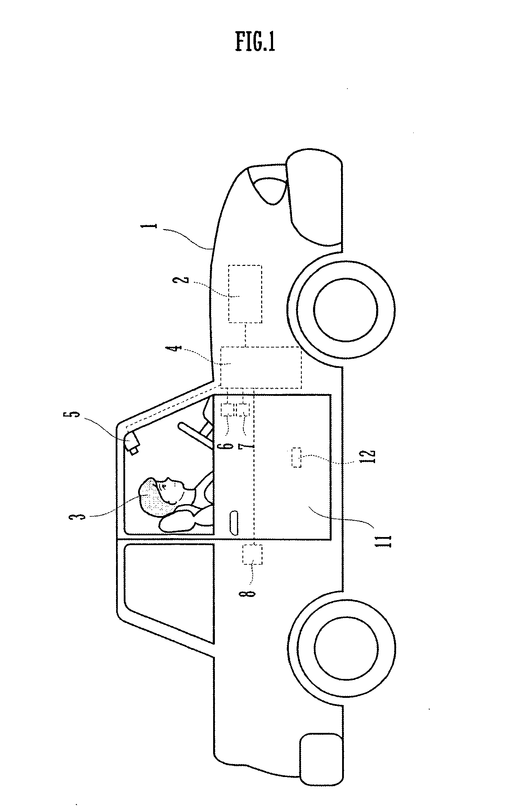

FIG.1 illustrates a vehicle, such as a car 1, provided with an authenticating apparatus such as a driver authenticating apparatus.

The car 1 includes an engine controller 2 connected to an ignition switch (not shown).
As in the case of a conventional car, a first person such as a potential driver (herein after referred to merely as the driver) 3, inserts a key into a receptacle of the ignition switch before starting an engine.

The engine controller 2 connects to a controller 4 configured to perform image authentications. The controller 4 connects to a CMOS camera 5, a registration switch 6, an enable switch 7, and a door sensor 8.

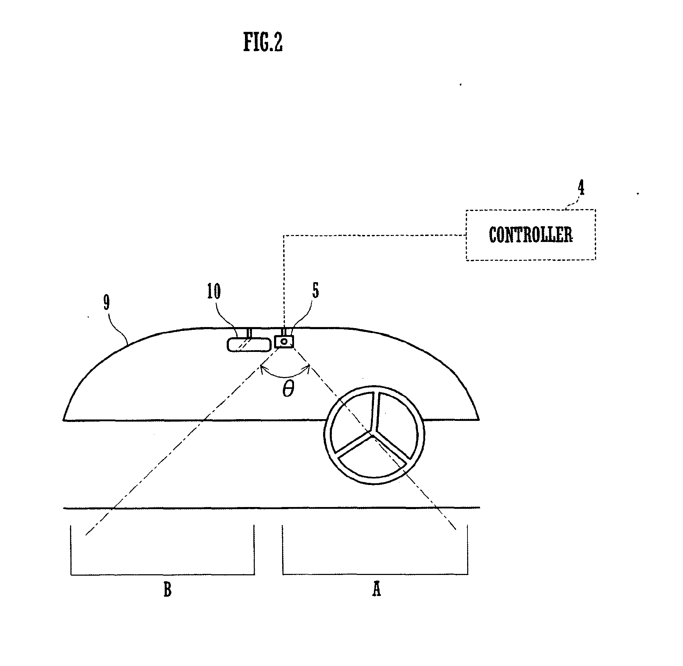

The CMOS camera 5 is a logarithmic transformation type camera with wide dynamic range. The CMOS camera 5 is mounted on an upper part of a windshield 9, as illustrated in FIG.2. The CMOS camera 5 is disposed adjacent to an interior rear-view mirror 10 that is also mounted on an upper part of the windshield 9.

As illustrated in FIG.2 as dashed line, the CMOS camera 5 is adapted to have an angle of view so as to cover scenes of both a driver seat A and a front passenger seat B, thereby enabling the CMOS camera 5 to capture facial images of persons in the respective seats.

The registration switch 6 is adapted to permit a driver or a front passenger to register a facial image thereof. Turning on the switch 6 causes the controller 4 to store a facial image being captured by the CMOS camera 5 in a registration memory (registration section) disposed in the controller 4.

More specifically, the controller 4 stores in the registration memory a computed feature data representing a facial feature of the captured facial image. Examples of match of facial images include, but are not limited to, a match of computed feature data of respective facial images.

The enable switch 7 is adapted to permit a driver or a passenger to enable or disable respective functions of the CMOS camera 5 and the controller 4. Turning on the enable switch 7 causes the functions of the CMOS camera 5 and the controller 4 to be in enabled state.

The door sensor 8 is adapted to detect whether the door 11 is in an open state or a closed state. The controller 4 activates the CMOS camera 5 and an image verifying section disposed in the controller 4, when the door sensor 8 detects that the door 11 shifts to the closed state from the open state.

The door sensor 8 can be replaced with a seat sensor 12 adapted to sense weight of a person applied to a seat. In the event that the seat sensor 12 is applied to the car 1, the CMOS camera 5 and the image verifying section are activated when the seat sensor 12 senses weight of a person applied to a seat.

Alternatively, a door sensor 8 or a seat sensor 12 may be provided adjacent to each of the driver seat and the front passenger seat. The CMOS camera 5 and the controller 4 may be activated when the door sensors 8 detect that the both doors shift to closed state or when the seat sensors detect that the driver and the passenger sit down on the respective driver and passenger seats.

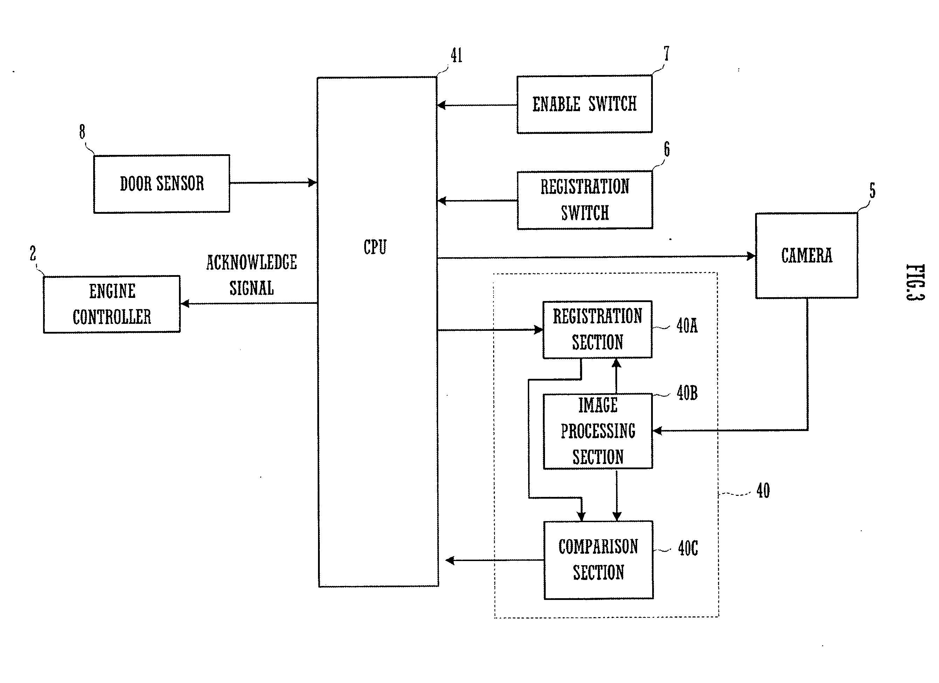

FIG.3 is a block diagram of the authenticating apparatus. The controller 4 is provided with an image verifying section 40 and a CPU 41. Each one of the registration switch 6, the function switch 7, the door sensor 8, and the engine controller 2 is connected to the CPU 41. The CMOS camera 5 is connected to the CPU 41 and to the image verifying section 40.

The image verifying section 40 is connected to the CPU 41. The image verifying section 40 includes a registration section 40A, an image processing section 40B, and a comparison section 40C. In a registration process, the registration section 40A is adapted to register computed feature data corresponding to a facial image captured by the CMOS camera 5.

The image processing section 40B is adapted to extract computed feature data from a facial image captured by the CMOS camera 5. The image processing section 40B feeds the data to the registration section 40A in the registration process, or to the comparison section 40C in the authenticating process. The comparison section 40C is adapted to compare the computed feature data fed from the image processing section 40B with a computed feature data corresponding to a pre-registered facial image stored in the registration section 40A. In other words, the comparison section 40C compares the captured facial image with the pre-registered facial image in the authenticating process.

The comparison section 40C feeds a comparison result to the CPU 41. The CPU 41 outputs an acknowledge signal to the engine controller 2, if a match of the respective facial images is declared. Upon receipt of the acknowledge signal, the engine controller 2 permits a potential driver to start an engine with an ignition switch.

The image processing section 40B extracts computed feature data in a process such as described below.
(1) The image processing section 40B extracts a facial image from an entire scene captured by the CMOS camera 5, by distinguishing density gap between a facial area and a background. If a captured image is a color image, a facial image is extracted from the entire scene by distinguishing a skin colored area.
(2) Then, the image processing section 40B searches the extracted image of (1) for distinguishable facial parts such as an eye, a nose, and a mouth.
   After completion of the search, center points and edge points of the respective facial parts are detected.
(3) The image processing section 40B detects a geometric positional relation of the facial parts in accordance with the center points and edge points, and computes feature data corresponding to the geometric positional relation.

The method of extracting a facial image by distinguishing a skin colored area is described, for example, in Japanese Patent application laid open No. 2004-20666A, the disclosure of which is incorporated herein by reference.

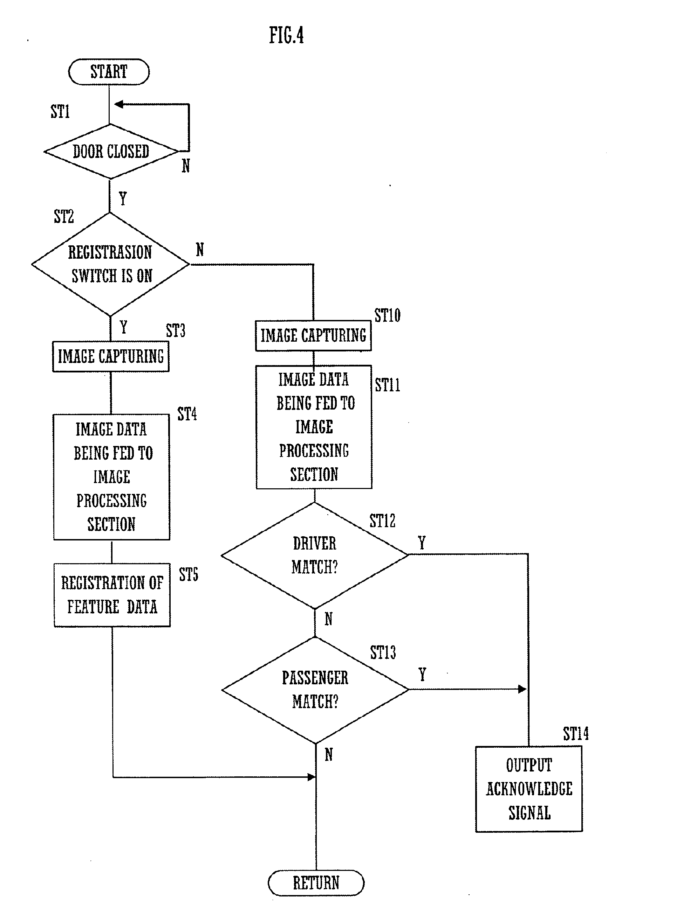

Described below with reference to FIG.4 is an operation performed by the driver authenticating apparatus. When the door sensor 8 detects that either one of the doors adjacent to respective driver and passenger seats at step ST1, the controller 4 judges that either one of a driver and a passenger is seated and moves on to step ST2.

The controller 4 judges whether the registration switch 6 is turned on (ST2).

When the switch 6 is turned on at step ST2, the controller 4 shifts to a registration mode for registering a facial image. On the contrary, when the switch 6 is not turned on at step ST2, the controller 4 shifts to a facial recognition mode.

In the registration mode, a facial image of a driver or a front passenger is captured by the CMOS camera 5 (ST3), and the captured image is fed to the image processing section 40B (ST4).

The image processing section 40B extracts the feature data from the captured facial image. The extracted feature data is registered in the registration section 40A (ST5).

Described above is a situation where either one of a driver and a front passenger sits down on a seat and turns on the switch 6.

The configuration according to the embodiment enables any one of facial images of a driver and a front passenger to be registered. Alternatively, a controller that registers only a driver's facial image may be used in the registration mode.

When the switch 6 is not turned on at step ST2, the controller 4 shifts to the facial recognition mode and move onto step ST10. At step ST10, the CMOS camera 5 captures facial images of a driver and a passenger. In the facial recognition mode, the CMOS camera 5 captures facial images of both a driver and a front passenger at one time.

The captured facial images (image data) are fed to the image processing section 40B. Then the image processing section 40B extracts computed feature data of the facial images (ST11).

For example, the image processing section 40B extracts feature data of a driver and a front passenger when the driver and the front passenger are seated in the respective driver and passenger seats.

The captured facial image of the driver is compared with a authorized facial image pre-registered in the registration section 40A. If match of the facial images is made, the acknowledge signal is fed to the engine controller 2 (ST14) .

The potential driver's facial image is compared with all authorized facial images registered in the registration section 40A. If the match is not made, then the captured facial image of the front passenger is compared with the authorized facial image at the comparison section 40C. If match of the facial images between the front passenger and the authorized driver is made, the acknowledge signal is fed to the engine controller 2 (ST14).

If neither the driver' facial image nor the front passenger's facial image matches the authorized facial image stored in the registration section 40A, the controller 4 moves back to step ST1 without outputting the acknowledge signal.

The steps shown in FIG.4 are not performed, with the enable switch 7 turned off. Accordingly, with the enable switch 7 turned off, the engine is started every time the ignition switch is turned on.

As mentioned above, the CMOS camera 5 is a logarithmic transformation type CMOS camera. Employing this type of camera widens a dynamic range, and enables a facial image to be extracted from an entire captured image, even if the captured image is a dark image with an unclear contrast.

The foregoing embodiments are illustrative in all points and should not be construed to limit the present invention. The scope of the present invention is defined not by the foregoing embodiment but by the following claims. Further, the scope of the present invention is intended to include all modifications within the meanings and scopes of claims.

## Claims

1. An apparatus for authenticating a driver of a vehicle (1), the apparatus comprising:
an image capturing section (5) adapted to capture facial image of a first person (3) in a driver seat (A);
a controller (4) adapted to compare the captured facial image with a pre-registered facial image of an authorized driver, and to allow the first person (3) to start an engine if the captured facial image matches the facial image of the authorized driver,
**characterized in that**
the image capturing section (5) captures facial image of a second person in a passenger seat (B) as well as the facial image of the first person and;
the controller (4) compares the captured facial images with the pre-registered facial image, and allows the first person (3) to start an engine if any one of the captured facial images matches the pre-registered facial image.

2. The authenticating apparatus according to claim 1,
wherein the controller (4) is adapted first to compare the facial image of the first person (3) with the facial image of the authorized driver, and then, in the event that the first person's facial image does not match the authorized driver's facial image, to compare the facial image of the second person with the facial image of the authorized driver.

3. The authenticating apparatus according to either claim 1 or 2, further comprising a door sensor (8) mounted on a door (11) of the vehicle (1), the door sensor (8) being adapted to detect whether the door (11) is in an open state or a closed state,
wherein the image capturing section (5) and the controller (4) are activated when the door sensor (8) detects that the door (11) shifts to the closed state from the open state.

4. The authenticating apparatus according to either claim 1 or 2, further comprising a seat sensor (12) for detecting presence of a person in a vehicle seat,
wherein the image capturing section (5) and the controller (4) are activated when the seat sensor (12) detects the presence of the person in the vehicle seat.

5. The authenticating apparatus according to any one of claims 1 to 4,
wherein each of the captured facial images and the authorized driver's facial image is represented as computed feature data corresponding to geometric positional relations among facial parts.

6. The authenticating apparatus according to claim 5,
wherein the controller (4) extracts the computed feature data from the captured facial image.

7. The authenticating apparatus according to any one of claim 1 to 6,
wherein the image capturing section (5) has such an angle of view that the facial images of the first person and the second person in a front passenger seat are captured at one time.

8. The authenticating apparatus according to claim 7,
wherein the image capturing section (5) has such an angle of view that respective facial images of the first and second persons and a third person in a back passenger seat are captured at one time.

## Patentansprüche

1. Vorrichtung zur Authentifizierung des Fahrers eines Kraftfahrzeugs (1), umfassend:
einen Bilderfassungsabschnitt (5), welcher geeignet ist, das Gesichtsbild einer ersten Person (3) in einem Fahrersitz (A) zu erfassen,
eine Steuerung (4), welche geeignet ist, das erfasste Gesichtsbild mit einem zuvor registrierten Gesichtsbild eines befugten Fahrers zu vergleichen und der ersten Person (3) das Starten eines Motors zu gestatten, falls das erfasste Gesichtsbild mit dem Gesichtsbild des befugten Fahrers übereinstimmt,
**dadurch gekennzeichnet, dass**
der Bilderfassungsabschnitt (5) das Gesichtsbild einer zweiten Person in einem Beifahrersitz (B) sowie das Gesichtbild der ersten Person erfasst und die Steuerung (4) das erfasste Gesichtsbild mit dem zuvor registrierten Gesichtsbild vergleicht und der ersten Person (3) das Starten eines Motors gestattet, falls eines der erfassten Gesichtsbilder mit dem zuvor registrierten Gesichtsbild übereinstimmt.

2. Authentifizierungsvorrichtung nach Anspruch 1,
wobei die Steuerung (4) geeignet ist, zunächst das Gesichtsbild der ersten Person (3) mit dem Gesichtsbild des befugten Fahrers zu vergleichen, und dann, falls das Gesichtsbild der ersten Person nicht mit dem Gesichtsbild des befugten Fahrers übereinstimmt, das Gesichtsbild der zweiten Person mit dem Gesichtsbild des befugten Fahrers zu vergleichen.

3. Authentifizierungsvorrichtung nach Anspruch 1 oder 2, welche ferner einen an einer Türe (11) des Kraftfahrzeugs (1) angebrachten Türsensor (8) umfasst, wobei der Türsensor (8) geeignet ist zu erkennen, ob sich die Türe (11) in einem offenen Zustand oder einem geschlossenen Zustand befindet, und wobei der Bilderfassungsabschnitt (5) und die Steuerung (4) aktiviert werden, wenn der Türsensor (8) erkennt, dass die Türe (11) von dem offenen Zustand in den geschlossenen Zustand wechselt.

4. Authentifizierungsvorrichtung nach Anspruch 1 oder 2, welche ferner einen Sitzsensor (12) umfasst, der die Anwesenheit einer Person in einem Fahrzeugsitz erkennt,
wobei der Bilderfassungsabschnitt (5) und die Steuerung (4) aktiviert werden, wenn der Sitzsensor (12) die Anwesenheit der Person in dem Fahrzeugsitz erkennt.

5. Authentifizierungsvorrichtung nach einem der Ansprüche 1 bis 4,
wobei das erfasste Gesichtsbild und das Gesichtsbild des befugten Fahrers jeweils als berechnete Merkmalsdaten vorliegen, die geometrischen Positionsbeziehungen zwischen den Gesichtspartien entsprechen.

6. Authentifizierungsvorrichtung nach Anspruch 5,
wobei die Steuerung (4) die berechneten Merkmalsdaten aus dem erfassten Gesichtsbild gewinnt.

7. Authentifizierungsvorrichtung nach einem der Ansprüche 1 bis 6,
wobei der Bilderfassungsabschnitt (5) einen solchen Bildwinkel besitzt, dass die Gesichtsbilder der ersten Person und der zweiten Person in einem vorderen Beifahrersitz gleichzeitig erfasst werden.

8. Authentifizierungsvorrichtung nach Anspruch 7,
wobei der Bilderfassungsabschnitt (5) einen solchen Blickwinkel besitzt, dass die jeweiligen Gesichtsbilder der ersten und der zweiten Person sowie einer dritten Person in einem hinteren Fahrgastsitz gleichzeitig erfasst werden.

## Revendications

1. Appareil pour authentifier un conducteur d'un véhicule (1), l'appareil comprenant :
une section d'acquisition d'image (5) adaptée pour acquérir l'image faciale d'une première personne (3) dans un siège de conducteur (A) ;
un contrôleur (4) adapté pour comparer l'image faciale acquise à une image faciale préenregistrée d'un conducteur autorisé, et pour permettre à la première personne (3) de démarrer un moteur si l'image faciale acquise correspond à l'image faciale du conducteur autorisé,
**caractérisé en ce que**
la section d'acquisition d'image (5) acquiert l'image faciale d'une deuxième personne dans un siège de passager (B) ainsi que l'image faciale de la première personne ; et
le contrôleur (4) compare les images faciales acquises à l'image faciale préenregistrée, et permet à la première personne (3) de démarrer un moteur si l'une quelconque des images faciales acquises correspond à l'image faciale préenregistrée.

2. Appareil d'authentification selon la revendication 1, dans lequel le contrôleur (4) est adapté d'abord pour comparer l'image faciale de la première personne (3) à l'image faciale du conducteur autorisé, puis, dans le cas où l'image faciale de la première personne ne correspond pas à l'image faciale du conducteur autorisé, pour comparer l'image faciale de la deuxième personne à l'image faciale du conducteur autorisé.

3. Appareil d'authentification selon l'une quelconque des revendications 1 et 2, comprenant en outre un capteur de portière (8) monté sur une portière (11) du véhicule (1), le capteur de portière (8) étant adapté pour détecter si la portière (11) est dans un état ouvert ou dans un état fermé,
dans lequel la section d'acquisition d'image (5) et le contrôleur (4) sont activés lorsque le capteur de portière (8) détecte que la portière (11) passe dans l'état fermé à partir de l'état ouvert.

4. Appareil d'authentification selon l'une quelconque des revendications 1 et 2, comprenant en outre un capteur de siège (12) pour détecter la présence d'une personne dans un siège de véhicule,
dans lequel la section d'acquisition d'image (5) et le contrôleur (4) sont activés lorsque le capteur de siège (12) détecte la présence de la personne dans le siège de véhicule.

5. Appareil d'authentification selon l'une quelconque des revendications 1 à 4,
dans lequel chacune des images faciales acquises et de l'image faciale du conducteur autorisé est représentée en tant que données de caractéristiques calculées correspondant à des relations positionnelles géométriques entre les parties faciales.

6. Appareil d'authentification selon la revendication 5,
dans lequel le contrôleur (4) extrait les données de caractéristiques calculées de l'image faciale acquise.

7. Appareil d'authentification selon l'une quelconque des revendications 1 à 6,
dans lequel la section d'acquisition d'image (5) a un angle de vision tel que les images faciales de la première personne et de la deuxième personne dans un siège de passager avant sont acquises en même temps.

8. Appareil d'authentification selon la revendication 7,
dans lequel la section d'acquisition d'image (5) a un angle de vision tel que des images faciales respectives des première et deuxième personnes et d'une troisième personne dans un siège de passager arrière sont acquises en même temps.
